# EUROPÄISCHE PATENTSCHRIFT

(11) **EP 2 515 663 B1**
(45) Veröffentlichungstag und Bekanntmachung des Hinweises auf die Patenterteilung: **22.01.2014**
(21) Anmeldenummer: 10787031.3
(22) Anmeldetag: 03.12.2010
(51) Int. Cl.: A23B 4/027, A23L 3/3562, A23L 1/09, A23L 1/314, A23L 1/317, A23L 1/325

(54) **VERBESSERTE PÖKELHILFSSTOFFE**
IMPROVED CURING ADDITIVES
ADDITIFS DE SALAGE AMÉLIORÉS

(30) Priorität: 23.12.2009 DE 102009060934
(43) Veröffentlichungstag der Anmeldung: 31.10.2012
(73) Patentinhaber: Südzucker Aktiengesellschaft Mannheim/Ochsenfurt, 68165 Mannheim (DE)
(72) Erfinder: HAJI BEGLI, Alireza, 67305 Ramsen (DE); TSCHILINGIRI, Waldemar, 67549 Worms (DE); WILLIUS, Sonja, 67574 Osthofen (DE)
(74) Vertreter: Wohlfahrt, Jan Günther
(86) Internationale Anmeldenummer: PCT/EP2010/007341
(87) Internationale Veröffentlichungsnummer: WO 2011/076333

(56) Entgegenhaltungen:
- EP-A1- 0 631 732
- WO-A1-2007/086752
- WO-A1-2009/149785
- AU-A4- 2009 100 200
- DE-A1- 10 111 941
- DE-A1-102004 002 380
- DE-A1-102007 026 975
- US-A- 3 122 442
- US-A- 3 595 682
- US-A- 4 156 027
- MITEVA E ET AL: "EFFECTS OF SOME TECHNOLOGIES OF CURING UNCOMMINUTED MEAT PRODUCTS OF THEIR FLAVOR PART 1. CHANGES IN THE CONTENTS OF FATTY ACIDS AS MEAT FLAVOR PRECURSORS", DIE NAHRUNG, Bd. 33, Nr. 4, 1989, Seiten 333-337, XP002626037, ISSN: 0027-769X, DOI: 10.1002/food.19890330410

## Beschreibung

Die Erfindung betrifft die Haltbarmachung und Herstellung von Lebensmitteln, besonders von Muskelfleisch enthaltenden Fleisch- und Fischprodukten, durch Pökeln mit Nitritsalzen. Die Erfindung stellt neue Pökelhilfsstoffe, vor allem verbesserte Zuckerstoffe zur Verwendung beim Pökeln dieser Lebensmittel bereit. Der verbesserte Zuckerstoff ist erfindungsgemäß eine Saccharoseisomerenzusammensetzung, enthaltend zu einem überwiegenden Anteil Isomaltulose und Trehalulose.

Im Allgemeinen werden unbehandelte Fleischwaren durch Oxidation des Muskelfarbstoffs schnell blass und/oder verderben durch Kontamination mit unerwünschten oder gesundheitlich bedenklichen Mikroorganismen, die insbesondere beim Schlachtvorgang oder bei der Weiterverarbeitung des Lebensmittels eingebracht werden. Das Pökeln verzögert oder unterbindet diese nachteiligen Effekte durch eine Vielzahl parallel ablaufender Mechanismen: Mikroorganismen werden an der Proliferation gehindert, überschüssiges Wasser wird entzogen, was die Konsistenz verbessert und den a_{W}-Wert senkt, und die Pökelfarbe und ein typisches Pökelaroma werden gebildet.

Nitritpökelsalz (NPS), eine Zusammensetzung aus Nitritsalz (üblicherweise NaNO₂) und Kochsalz (NaCl), wird bekanntermaßen zum Pökeln von Lebensmitteln, beispielsweise Rohpökelwaren und Rohwürsten, verwendet. Bei dem sogenannten Umrötungsprozess wird Nitrit unter Säurekatalyse zu Nitrat und Stickstoffmonoxid (NO) disproportioniert. NO verbindet sich dabei mit dem in Muskelfasern von Muskelfleisch höherer Wirbeltiere enthaltenen Myoglobin zu einem roten Farbstoff, dem Nitrosomyoglobin, der das Lebensmittel dauerhaft rot einfärben kann.

Eine weitere Komponente des Pökelvorgangs ist die enzymatische Aktivität von im Lebensmittel enthaltenen oder gegebenenfalls gezielt zugesetzten Mikroorganismen, besonders Staphylokokken und Lactobazillen. Diese Organismen dienen durch organismeneigene Nitratreduktaseaktivität der Umwandlung von Nitrat zurück in Nitrit und erzeugen durch ihre Stoffwechselaktivität eine pH-Wertabsenkung (Säurebildung), was die Disproportionierung zu NO unterstützt. Die Disproportionierung wird weiter durch eine im Muskelfleisch ablaufende anaerobe Glykolyse, die mit einer pH-Wertabsenkung (Säurebildung) einhergeht, unterstützt. Durch den pH-Wertabfall gerinnt das Eiweiß des Lebensmittels, insbesondere das Muskeleiweiß, und wird schnittfester.

Durch Erhitzen beim Abschluss des Pökelvorgangs reagiert Nitrit mit bestimmten weiteren Komponenten des Lebensmittels, sodass weitere antimikrobiell wirkende Stoffe, der sogenannte Perigo-Faktor, entstehen. Insgesamt ist bekanntermaßen für den konservierenden, antimikrobiellen Effekt eine weit höhere Nitritmenge erforderlich als für die Ausbildung von Pökelfarbe und Pökelaroma.

Nitrit als solches ist als toxische Substanz bekannt, die Stoffwechselvorgänge im menschlichen oder tierischen Körper, besonders Teile der Atmungskette, nachteilig stören kann. Obwohl nitritgepökelte Lebensmittel, insbesondere gepökelte Fleischerzeugnisse, nur einen sehr geringen Beitrag von circa 3 % zur gesamten Nitritbelastung des menschlichen Organismus haben, ist es aus physiologischmedizinischer Sicht, aus Sicht des "aufgeklärten" Verbrauchers, zur Auslobbarkeit auf den Lebensmittelprodukten und auch zur Erfüllung neuer gesetzlicher Richtlinien wünschenswert und erforderlich, den Einsatz von Nitrit in zu pökelnden Lebensmitteln und insbesondere die Restmenge an Nitrit im gepökelten Lebensmittelprodukt zu verringern. So gelten als neue Richtwerte für den Zusatz von Nitritsalzen in nicht hitzebehandelten, gepökelten und getrockneten Fleischerzeugnissen 150 mg/kg (ausgedrückt als NaNO₂) für die maximale Nitritzugabe zum zu pökelnden Lebensmittel und 50 mg/kg für die maximale Restnitritmenge im gepökelten Lebensmittelprodukt zum Zeitpunkt der Abgabe an den Verbraucher. Für die strengeren europäischen Öko-Richtlinien gelten Grenzwerte von 80 bis 100 mg/kg für die maximale Nitritzugabe sowie ein maximal zulässiger Restnitritgehalt von 50 mg/kg zum Zeitpunkt der Abgabe an den Verbraucher. Die Werte können in bekannten Verfahren teilweise nicht eingehalten werden, wenn damit verbundene Mängel im Pökelergebnis, wie unzureichende, nicht dauerhafte Umrötung, geschmackliche Nachteile, geringere Haltbarkeit und mikrobielle Kontamination nicht mit in Kauf genommen werden sollen.

Um die gewünschte Pökelwirkung von Nitritsalzen, insbesondere die Keimstabilisierung und die Umrötung, zu verbessern und auch bei geringeren Nitritanteilen aufrecht zu erhalten, werden bekanntermaßen sogenannte Pökelhilfsstoffe im Pökelvorgang zugesetzt. Ein bekannter Pökelhilfsstoff ist Ascorbinsäure oder Ascorbat, welches als antioxidativ wirkendes Reduktionsmittel und auch als säurebildende Komponente, gegebenenfalls in Verbindung mit Natriumtripolyphosphat oder synthetischen Antioxidantien wie BHA und BHT, eingesetzt wird. Es können außerdem Gewürze oder Gewürzextrakte eingesetzt werden, die natürlich vorkommende Antioxidantien enthalten. Darunter zählen zum Beispiel die Gewürznelke und Rosmarin sowie Extrakte daraus. Diese Pökelhilfsstoffe wirken sich in bestimmten Rezepturen erkennbar nachteilig auf den Geschmack aus. Außerdem ist der Zusatz dieser Stoffe mit Änderungen des Probenablaufs gegenüber herkömmlichen Rezepturen verbunden.

In anderen Ansätzen wird versucht, durch Zusatz hoch Nitrat-haltiger Gemüsekonzentrate zum Lebensmittel das Pökelergebnis zu verbessern und gesetzliche Beschränkungen bezüglich der Zugabe von Nitrat- oder Nitritsalzen zu umgehen. Ein geringer Nitrat- oder Nitritgehalt wird damit in der Regel nur scheinbar erreicht. Weitere Pökelhilfsstoffe sind "Zuckerstoffe", die zur Unterstützung des Pökelvorgangs eingesetzt werden und das Pökelergebnis verbessern sollen. Bekannte Zuckerstoffe dienen den beim Pökelvorgang vorhandenen Mikroorganismen (Pökelflora) als Nahrungsquelle.

Bekanntermaßen ist der Umrötungsvorgang zur Ausbildung der dauerhaften Fleischfarbe im Pökelprozess zeitaufwändig und die empfohlenen reduzierten Nitritmengen führen zu einer Umrötung, die nachteiligerweise nur relativ kurze Zeit anhält. Es ist daher wünschenswert, den Umrötungsvorgang zu beschleunigen und/oder das Umrötungsergebnis auch bei kurzer Prozessdauer und niedrigerem Nitritgehalt zu verbessern.

DE 10 2004 002 380 A1 offenbart eine Streichmettwurst.

EP 0 631 732 A1 offenbart eine Brühwurst, insbesondere Brühwürstchen und Verfahren zu ihrer beziehungsweise seiner Herstellung. Miteva et al., Die Nahrung, 1989, 33 (4), 333-337 offenbaren die Effekte von einigen Technologien zum Haltbarmachen von nicht zerkleinerten Fleischprodukten auf deren Geschmack.

US 3,122,442 A offenbart Trockensubstanzzusammensetzungen für die Fleischverarbeitung.

US 3,595,682 A offenbart ein Verfahren zur Herstellung eines geräucherten knochenfreien Truthahnrollenbratens.

US 4,156,027 A offenbart ein bei niedriger Temperatur geräuchertes Wurstprodukt und dessen Herstellung.

AU 2009100200 A4 offenbart ein Honig enthaltendes Fleischprodukt und dessen Herstellverfahren.

WO 2007/086752 A1 offenbart eine Zucker und Salz enthaltende Zusammensetzung für die Behandlung von Fleisch.

DE 101 11 941 A1 offenbart eine Lachswurst.

DE 10 2007 026 975 A1 offenbart die Verwendung von Isomaltulose als Antioxidationsmittel für Lebensmittel.

WO 2009/149785 A1 offenbart ein hochwirksames Antioxidationsmittel auf Basis von Trehalulose.

Der Erfindung lag das technische Problem zugrunde, verbesserte Verfahren und Mittel zum Pökeln von Lebensmitteln bereitzustellen, mit denen insbesondere der Restnitritgehalt im gepökelten Lebensmittel verringert und/oder die Qualität des Pökelergebnisses, besonders auch die Umrötung, vor allem die Intensität und Haltbarkeit der Pökelfarbe, verbessert werden kann.

Die Erfindung löst das zugrunde liegende technische Problem vollständig durch die Bereitstellung eines Kits zum Pökeln von Lebensmitteln aus mehreren Komponenten, wobei das Kit zumindest folgende Komponenten enthält oder daraus besteht: Nitritpökelsalzkomponente (NPS) und Zuckerstoffkomponente, wobei das Kit erfindungsgemäß vor allem dadurch gekennzeichnet ist, dass die Zuckerstoffkomponente des Kits eine Saccharoseisomerenzusammensetzung ist, die zum überwiegenden Anteil aus den Saccharoseisomeren Isomaltulose und Trehalulose besteht.

Unter einem "Kit" zum Pökeln von Lebensmitteln wird sowohl ein Kit aus separaten Einzelkomponenten verstanden, die im Zusammenhang mit deren zweckgerichteter Verwendung, also dem Vorgang des Pökelns zusammen, gegebenenfalls aber auch in getrennten Arbeitsschritten des Vorgangs, eingesetzt werden. Unter einem Kit wird vorliegend aber auch eine einteilige Pökelsalzzusammensetzung verstanden, die sowohl die Nitritpökelsalzkomponente des Kits als auch zumindest die erfindungsgemäße Zuckerstoffkomponente des Kits in einer Mischung enthält. In bevorzugter Ausgestaltung kann das erfindungsgemäße Kit beziehungsweise die Nitritpökelsalzzusammensetzung weitere Komponenten oder Bestandteile enthalten.

Die erfindungsgemäß eingesetzte "Zuckerstoffkomponente" ist ein Pökelhilfsstoff. Die erfindungsgemäße Zuckerstoffkomponente ist zur Verwendung als Pökelhilfsstoff zum Pökeln von Lebensmitteln, das heißt als Komponente des erfindungsgemäßen Kits oder als Bestandteil der erfindungsgemäßen Pökelzusammensetzung vorgesehen. In dem erfindungsgemäßen Kit oder der entsprechend zusammengesetzten Pökelsalzzusammensetzung können in weiteren Ausgestaltungen der Erfindung und deren Varianten weitere Pökelhilfsstoffe enthalten sein. Dazu zählen besonders säurebildende Pökelhilfsstoffkomponenten und antioxidativ wirkende Pökelhilfsstoffkomponenten. In bevorzugten Ausführungen ist eine Pökelhilfsstoff- oder Zuckerstoffkomponente eine Reinsubstanz, ein Gemisch oder eine Zusammensetzung. Bevorzugt bildet eine Zuckerstoffkomponente oder eine andere Pökelhilfsstoffkomponente sowohl die Zuckerstoffkomponente als auch die säurebildende Pökelhilfsstoffkomponente oder alternativ und bevorzugt zusätzlich die antioxidativ wirkende Pökelhilfsstoffkomponente oder jeweils Teile davon.

In bevorzugten Varianten davon ist das Kit und die entsprechende Pökelsalzzusammensetzung frei von weiteren Pökelhilfsstoffen und vorzugsweise frei von weiteren säurebildenden Pökelhilfsstoffen und alternativ und bevorzugt zusätzlich frei von weiteren antioxidativ wirkenden Pökelhilfsstoffen. Bevorzugt ist das Kit und die entsprechende Pökelsalzzusammensetzung frei von Ascorbinsäure und deren Salzen, frei von Glucono-delta-lacton, frei von synthetischen Antioxidantien wie BHA und BHT, frei von anderen reduzierend wirkenden Zucker und Zuckerderivaten und/oder frei von anderen Zuckersäuren und Zuckersäurederivaten.

Bevorzugt ist die erfindungsgemäße Zuckerstoffkomponente in einem Anteil von 0,3 bis 15 g, bevorzugt von 0,5 bis 9 g, besonders bevorzugt von 1 bis 5 g, bezogen auf das Trockensubstanzgewicht der Zuckerstoffkomponente und jeweils bezogen auf 1 kg des zu pökelnden Lebensmittels, enthalten.

Als Zuckerstoffe können beim Pökeln bekanntermaßen Fructose, Saccharose, Maltose, Lactose, Stärkehydrolysate, Glucosesirup sowie Glucono-delta-Lacton (GdL) eingesetzt werden. Erfindungsgemäß werden nun diese Zuckerstoffe in bekannten und neuen Rezepten zum Pökeln durch die erfindungsgemäße Saccharoseisomerenzusammensetzung ergänzt oder bevorzugt teilweise und besonders bevorzugt vollständig ersetzt oder in Rezepturen zum Pökein, die bisher ohne Zusatz von Zuckerstoffen ausgelegt waren, neu beigefügt. Bevorzugt enthalten das Kit, die Pökelsalzzusammensetzung und/oder die Zuckerstoffkomponente des Kits neben der erfindungsgemäßen Saccharoseisomerenzusammensetzung keine weiteren Saccharide, insbesondere keine bekannten, zum Pökeln ansonsten gegebenenfalls eingesetzten Zuckerstoffe, vor allem aber keine Glucose, keine Fructose und/oder keine Saccharose, als zusätzlichen Bestandteil. Bevorzugt besteht die Zuckerstoffkomponente ausschließlich aus der erfindungsgemäßen Saccharoseisomerenzusammensetzung, die nachfolgend näher charakterisiert werden soll.

Gemäß eines weiteren Aspekts der Erfindung wird die erfindungsgemäße Zuckerstoffkomponente zusammen mit an sich bekannten Zuckerstoffkomponenten, besonders zusammen mit Glucose und/oder Fructose, eingesetzt.

Die erfindungsgemäße Zuckerstoffkomponente zeichnet sich gemäß dieser Erfindung dadurch aus, dass sie die SaccharoseisomereTrehalulose und Isomaltulose enthält. Bevorzugt werden als Zuckerstoffkomponente Gemische aus Isomaltulose und Trehalulose eingesetzt.

Bevorzugt enthält die Zuckerstoffkomponente, jeweils bezogen auf Trockensubstanzgewicht, Trehalulose in einem Anteil von mindestens 10 Gew.-% oder mehr, mehr bevorzugt mindestens 15 Gew.-% oder mehr, mehr bevorzugt mindestens 20 Gew.-% oder mehr, mehr bevorzugt mindestens 25 Gew.-% oder mehr, mehr bevorzugt mindestens 30 Gew.-% oder mehr, mehr bevorzugt mindestens 35 Gew.-% oder mehr, mehr bevorzugt mindestens 40 Gew.-% oder mehr, mehr bevorzugt mindestens 45 Gew.-% oder mehr, mehr bevorzugt mindestens 50 Gew.-% oder mehr, mehr bevorzugt mindestens 55 Gew.-% oder mehr, mehr bevorzugt mindestens 60 Gew.-% oder mehr, mehr bevorzugt mindestens 65 Gew.-% oder mehr, mehr bevorzugt mindestens 70 Gew.-% oder mehr, mehr bevorzugt mindestens 75 Gew.-% oder mehr, mehr bevorzugt mindestens 80 Gew.-% oder mehr, mehr bevorzugt mindestens 85 Gew.-% oder mehr, mehr bevorzugt mindestens 90 Gew.-% oder mehr und mehr bevorzugt mindestens 95 Gew.-% oder mehr.

In einer anderen bevorzugten Variante enthält die Zuckerstoffkomponente, jeweils bezogen auf Trockensubstanzgewicht, Isomaltulose in einem Anteil von mindestens 10 Gew.-% oder mehr, mehr bevorzugt mindestens 15 Gew.-% oder mehr, mehr bevorzugt mindestens 20 Gew.-% oder mehr, mehr bevorzugt mindestens 25 Gew.-% oder mehr, mehr bevorzugt mindestens 30 Gew.-% oder mehr, mehr bevorzugt mindestens 35 Gew.-% oder mehr, mehr bevorzugt mindestens 40 Gew.-% oder mehr, mehr bevorzugt mindestens 45 Gew.-% oder mehr, mehr bevorzugt mindestens 50 Gew.-% oder mehr, mehr bevorzugt mindestens 55 Gew.-% oder mehr, mehr bevorzugt mindestens 60 Gew.-% oder mehr, mehr bevorzugt mindestens 65 Gew.-% oder mehr, mehr bevorzugt mindestens 70 Gew.-% oder mehr, mehr bevorzugt mindestens 75 Gew.-% oder mehr, mehr bevorzugt mindestens 80 Gew.-% oder mehr, mehr bevorzugt mindestens 85 Gew.-% oder mehr, mehr bevorzugt mindestens 90 Gew.-% oder mehr und mehr bevorzugt mindestens 95 Gew.-% oder mehr.

In einer alternativen Ausführung ist die Zuckerstoffkomponente eine Isomaltulose-Sirupzusammensetzung. Diese enthält, jeweils bezogen auf das Trockensubstanzgewicht, 70 bis 90, bevorzugt 80 bis 85 Gew.-% Isomaltulose, 5 bis 15, bevorzugt 7 bis 12 Gew.-% Trehalulose und gegebenenfalls 0 bis etwa 8 Gew.-%, bevorzugt 0 bis 3 Gew.-% Restsaccharide, insbesondere ausgewählt aus Fructose, Glucose, Saccharose, Isomaltose und gegebenenfalls Oligomere (DP ≥ 3). In einer bevorzugten Ausführung ist der Isomaltulose-Sirup herstellbar, wie dies in der EP 0 625 578 A1 beschrieben ist, und zwar durch Isomerisierung von Saccharose an bevorzugt immobilisierten Zellen des Stammes *Protaminobacter rubrum.* Varianten des Isomaltulose-Sirups haben Zusammensetzungen, wie sie in der EP 0 625 578 A1, besonders in den Beispielen 1 B, 1C, 2 und 3, beschrieben sind. Eine Variante des Isomaltulose-Sirups enthält etwa 82,5 Gew.-% Isomaltulose, etwa 9,5 Gew.-% Trehalulose, etwa 2,5 Gew.-% Fructose, etwa 2,0 Gew.-% Glucose, etwa 1,0 Gew.-% Saccharose, etwa 1,5 Gew.-% Isomaltose und etwa 1,0 Gew.-% Oligomere mit DP ≥ 3.

In einer anderen alternativen Ausführung ist die Zuckerstoffkomponente eine Trehalulose-Sirup-Zusammensetzung, die, jeweils bezogen auf Trockensubstanzgewicht, 70 bis 85, bevorzugt 77 bis 83 Gew.-% Trehalulose, 10 bis 25, bevorzugt 15 bis 20 Gew.-% Isomaltulose und gegebenenfalls 0 bis 3 Gew.-% Restsaccharide, insbesondere ausgewählt aus Fructose, Glucose, Saccharose, Isomaltose, Isomelizitose und Oligomere (DP ≥ 3) enthält. Bevorzugt ist ein Trehalulose-Sirup, gemäß den in der EP 0 625 578 A1 beschriebenen Verfahren herstellbar, und zwar durch Isomerisierung von Saccharose an bevorzugt immobilisierten Zellen des Stammes *Protaminobacter rubrum.* Eine Variante des Trehalulose-Sirups hat die in Beispiel 7 der EP 0 625 578 A1 genannte Zusammensetzung, die etwa 80,5 Gew.-% Trehalulose, etwa 17,1 Gew.-% Isomaltulose, etwa 0,4 Gew.-% Fructose, etwa 0,4 Gew.-% Glucose, etwa 0,6 Gew.-% Saccharose, etwa 0,2 Gew.-% Isomaltose sowie insgesamt etwa 1,0 Gew.-% Isomelizitose und Oligomere (DP ≥ 3) enthält; eine alternative Variante gemäß Beispiel 7 enthält etwa 85,7 Gew.-% Trehalulose, etwa 12,5 Gew.-% Isomaltulose, etwa 0,2 Gew.-% Fructose, etwa 0,2 Gew.-% Glucose, etwa 1,0 Gew.-% Saccharose, etwa 0,2 Gew.-% Isomaltose und etwa 0,2 Gew.-% Oligomere (DP ≥ 3).

In einer anderen Ausführung ist die Zuckerstoffkomponente eine Trehalulose-Zusammensetzung, die, jeweils bezogen auf Trockensubstanzgewicht, 60 bis 70 , bevorzugt 65 Gew.-% Trehalulose, 5 bis 15, bevorzugt 9 bis 10 Gew.-% Isomaltulose, 20 bis 30, bevorzugt 25 Gew.-% Saccharose und gegebenenfalls 0 bis 3 Gew.-% Restsaccharide, insbesondere Fructose, Glucose, Isomaltose und Oligomere (DP > 3) enthält. Bevorzugt ist ein Trehalulose-Sirup, gemäß dem in der WO 2009/095171 A1 beschriebenen Verfahren herstellbar.

In einer weiteren alternativen Ausführung ist die Zuckerstoffkomponente ein besonders bei der Herstellung von Isomaltulose und Trehalulose anfallender technischer Sirup oder Melasse, der aus dem Herstellprozess ausgeleitet werden kann. Dieser enthält in bevorzugter Ausgestaltung 25 bis 40 Gew.-% Isomaltulose, 20 bis 35 Gew.-% Trehalulose, 25 bis 40 Gew.-% Saccharose und 0 bis 15 Gew.-% Restsaccharide, besonders ausgewählt aus Fructose, Glucose, Isomaltose und Oligosaccharide (DP ≥ 3). In einer bevorzugten konkreten Ausgestaltung enthält dieser Sirup 27 bis 37 Gew.-% Isomaltulose, 23 bis 33 Gew.-% Trehalulose, 27 bis 37 Gew.-% Saccharose sowie zu maximal 10 Gew.-% Restsaccharide (besonders Fructose, Glucose, Isomaltose und Oligosaccharide (DP ≥ 3). In einer besonders bevorzugten Ausführung ist diese Zusammensetzung ein Sirup, der aufgrund der technischen Prozessführung saure Nebenprodukte, das heißt ungepufferte Säuren, insbesondere Zuckersäuren, enthält und einen pH-Wert von 5 oder weniger, besonders von 4 bis 5, bevorzugt von 4,5 bis 5,0, aufweist. In einer alternativen Ausgestaltung weist die Zusammensetzung, bevorzugt nach Pufferung der Alkalisierung der Säuren, einen pH-Wert von 5 oder mehr, bevorzugt von 5 bis 6, auf. Dieser technische Sirup ist außerdem geeignet, sowohl die Zuckerstoffkomponente des Kits, als auch zusätzlich eine säurebildende Pökelhilfsstoffkomponente zu bilden.

Es versteht sich, dass die Erfindung nicht nur solche Saccharoseisomerenzusammensetzungen betrifft, die sich technisch zweckmäßig als Reaktionsprodukte von Isomerisierungsreaktionen ergeben. Vielmehr umfasst die Erfindung auch, insbesondere dem entsprechend, zusammengesetzte Mischungen und Rezepturen, die sich insbesondere durch Zusammenfügen der Einzelkomponenten oder durch Anreichern oder Abreichern einzelner oder mehrerer Komponenten aus anderen Zusammensetzungen oder Mischungen ergeben. So umfasst die Erfindung auch solche Saccharoseisomerenzusammensetzungen, die sich durch Vermischen von Isomaltulose und Trehalulose und gegebenenfalls weiteren Sacchariden wie Glucose und gegebenenfalls Fructose herstellen lassen. Gegenstand der Erfindung sind in besonderen Varianten auch Saccharoseisomerenzusammensetzungen, die frei von einem bestimmten Saccharoseisomer ist.

Allgemein haben die erfindungsgemäßen, als Zuckerstoffkomponente des Pökel-Kits einsetzbaren Saccharoseisomerenzusammensetzungen die Eigenschaft, selbst antioxidativ beziehungsweise reduzierend zu wirken. In einer bevorzugten Ausführung des Kits bilden die Saccharoseisomerenzusammensetzungen sowohl die Zuckerstoffkomponente wie auch eine antioxidativ wirkende Pökelhilfsstoffkomponente.

Die Erfinder fanden überraschend, dass die vorstehend charakterisierten Saccharoseisomerenzusammensetzungen als Zuckerstoffkomponente beim Pökeln von Lebensmitteln, insbesondere Fleisch, aber auch Fisch sowie Fleisch- oder Fisch-haltigen Produkten wie Wurst, Rohfischzubereitungen und ähnlichen, in Verbindung mit Nitritpökelsalz den Pökelvorgang derart günstig beeinflussen, dass in einem ersten Aspekt die Menge an einzusetzendem Nitritpökelsalz, besonders die Menge an einzusetzendem Nitritsalz pro Gewichtsanteil des zu pökelnden Lebensmittels, deutlich reduziert werden kann, wobei die gewünschten Pökelwirkungen und weiteren Effekte weitgehend oder vollständig erhalten bleiben. So zeigt sich, dass bei der Verwendung der erfindungsgemäßen Zuckerstoffkomponente der Restnitritgehalt nach beispielsweise 72 oder 120 Stunden Reifezeit des gepökelten Lebensmittels deutlich unter dem geforderten Grenzwert von 50 mg/kg Nitrit (bezogen auf Natriumnitrit) erreicht wird.

Weiter fanden die Erfinder überraschend, dass in einem zweiten Aspekt durch die erfindungsgemäße Zuckerstoffkomponente im Vergleich zu der Referenzsubstanz Glucose aus üblichen Rezepturen eine signifikant bessere Umrötung des Lebensmittels bei bevorzugt gleichzeitig geringerem Restnitritgehalt erreicht werden kann. Überraschenderweise kann auch bei einer Reduzierung der Einsatzmenge der Zuckerstoffkomponente immer noch ein besseres Pökelergebnis erzielt werden als bei einer Standardrezeptur, worin eine bekannte Zuckerstoffkomponente wie Glucose verwendet wird.

Als dritter Aspekt kann vorteilhafterweise bei Verwendung der erfindungsgemäßen Zuckerstoffkomponente beim Pökeln auf den Einsatz von weiteren bekannten antioxidativ wirkenden Pökelhilfsstoffkomponenten, insbesondere auf Ascorbinsäure oder Ascorbat, weitgehend und vorzugsweise vollständig verzichtet werden. Zumindest stellt die vorliegende Erfindung mit der erfindungsgemäß einsetzbaren Zuckerstoffkomponente ein Mittel bereit, mit dem der Einsatz weiterer antioxidativ wirkender Pökelhilfsstoffkomponenten vermindert werden kann. Gegenstände der Erfindung sind somit auch ein Kit zum Pökeln sowie eine entsprechend zusammengesetzte Pökelzusammensetzung, die frei von zusätzlichen antioxidativen Pökelhilfsstoffkomponenten wie Ascorbinsäure oder deren Salzen sind.

Die Erfindung beruht weiter auf der Erkenntnis, dass als vierter Aspekt die erfindungsgemäße Zuckerstoffkomponente zumindest mit einer bevorzugt zusätzlich vorgesehenen säurebildenden Pökelhilfsstoffkomponente ein sogenanntes "Pökelsystem" bildet, das gegenüber bekannten Pökelsystemen, wie Glucose und Ascorbinsäure, den Pökelvorgang deutlich effizienter unterstützt und beschleunigt. Gegenstand der Erfindung ist demgemäß auch ein Kit oder eine entsprechende Pökelsalzzusammensetzung, worin in die Nitritpökelsalzkomponente Nitritsalz, besonders Natriumnitrit, in einem reduzierten Anteil von maximal 0,6 Gew.-%, bevorzugt von 0,1 bis 0,6 Gew.-%, und besonders bevorzugt bis 0,5 Gew.-%, weiter bevorzugt bis 0,4 Gew.-%, weiter bevorzugt bis 0,3 Gew.-%, enthalten ist. Bevorzugt ist ein erfindungsgemäßes Kit oder eine Pökelsalzzusammensetzung, worin Nitritsalz, besonders Natriumnitrit, in einem Anteil bis maximal 150 mg, bevorzugt maximal 100 mg, besonders bevorzugt maximal 50 mg, weiter bevorzugt in einem Anteil von stets weniger als 50 mg, jeweils bezogen auf 1 kg des zu pökelnden Lebensmittels, enthalten ist.

Weiter fanden die Erfinder überraschend, dass in einem fünften Aspekt die erfindungsgemäße Zuckerstoffkomponente in Kombination mit einer oder mehreren neuartigen säurebildenden Pökelhilfsstoffkomponenten, insbesondere Lactobionsäure und/oder Lactobionsäure-delta-lacton, die vorbeschriebenen überraschenden technischen Wirkungen in noch höherem Maße zeigt. Gegenstand der Erfindung ist demgemäß auch ein Kit oder eine entsprechende Pökelsalzzusammensetzung, welche mindestens eine säurebildende Pökelhilfsstoffkomponente aufweist. Diese ist bevorzugt ausgewählt aus der Gruppe der säurebildenden Substanzen, bestehend aus: Ascorbinsäure und deren Salze, Glucono-delta-Lacton, Lactobionsäure und deren Salze, Lactobionsäure-delta-lacton sowie Gemischen davon. Besonders bevorzugt ist die säurebildende Pökelhilfsstoffkomponente Lactobionsäure. In einer anderen bevorzugten Variante ist die säurebildende Pökelhilfsstoffkomponente Lactobionsäure-delta-lacton. In einer anderen bevorzugten Variante ist die säurebildende Pökelhilfsstoffkomponente ein Gemisch aus Ascorbinsäure oder deren Salzen mit Lactobionsäure oder deren Salzen, alternativ oder bevorzugt zusätzlich zusammen mit Lactobionsäure-delta-lacton.

In einer weiteren Ausführung enthält das erfindungsgemäße Kit beziehungsweise die entsprechende Pökelsalzzusammensetzung zusätzlich mindestens eine, bevorzugt weitere, antioxidativ wirkende Pökelhilfsstoffkomponenten. Diese sind bevorzugt ausgesucht aus der Gruppe der Antioxidantien, bestehend aus: sekundären Pflanzenstoffen, Gewürzen und Gewürzextrakten mit antioxidativer Wirkung sowie Gemischen davon. In einer Variante wird die antioxidativ wirkende Pökelhilfsstoffkomponente durch die vorstehend charakterisierte säurebildende Pökelhilfsstoffkomponente des Kits gebildet. In einer anderen bevorzugten Variante wird die antioxidativ wirkende Pökelhilfsstoffkomponente durch die vorstehend charakterisierte Zuckerstoffkomponente des Kits gebildet, die bevorzugt auch die säurebildende Pökelhilfsstoffkomponente bildet.

Bevorzugt ist die säurebildende Pökelhilfsstoffkomponente in dem Kit oder der entsprechenden Pökelsalzzusammensetzung in einem Anteil von 0,1 bis 9 g, bevorzugt von 0,1 bis 5 g, besonders bevorzugt von 0,1 bis 1,5 g (bezogen auf das Trockensubstanzgewicht der Pökelhilfsstoffkomponente), im Falle von Lactobionsäure und/oder Lactobionat sowie im Falle von Lactobionsäure-delta-lacton bevorzugt in einem Anteil von 0,1 bis 3 g, besonders bevorzugt von 0,1 bis 1,5 g (bezogen auf Trockensubstanzgewicht), jeweils bezogen auf 1 kg des zu pökelnden Lebensmittels, enthalten.

Ein weiterer Aspekt der Erfindung sieht ein Pökelsystem vor, worin eine an sich bekannte Zuckerstoffkomponente, besonders Glucose, zusammen mit einer vorstehend näher definierten neuartigen säurebildenden Pökelhilfsstoffkomponente, insbesondere Lactobionsäure und/oder Lactobionat und/oder Lactobionsäure-delta-lacton und/oder Gemischen davon bereitgestellt wird. Im Zusammenhang mit diesem Aspekt fanden die Erfinder überraschend, dass diese neuartigen säurebildenden Pökelhilfsstoffkomponenten die Wirkung bekannter Pökelhilfsstoffe wie Zuckerstoffe, insbesondere Glucose, sowie bevorzugt auch die Wirkung bekannter antioxidativ wirkender Pökelhilfsstoffe, wie bevorzugt Ascorbinsäure oder Ascorbat, unterstützt und synergistisch verbessern. Die Erfindung sieht demgemäß auch ein Kit zur Verwendung zum Pökeln von Lebensmitteln beziehungsweise eine Pökelhilfsstoffzusammensetzung vor, die als Zuckerstoffkomponente zumindest Glucose, und gegebenenfalls zusätzlich als antioxidativ wirkende Komponente Ascorbinsäure und/oder Ascorbat zusammen mit einer neuartigen erfindungsgemäßen säurebildenden Pökelhilfsstoffkomponente, ausgewählt aus Lactobionsäure, Lactobionat, Lactobionsäure-delta-lacton und Gemischen davon enthält oder bevorzugt daraus besteht.

Demgemäß ist als erfindungsgemäße säurebildende Pökelhilfsstoffkomponente in dem Kit oder der entsprechenden Pökelsalzzusammensetzung Ascorbinsäure und/oder Ascorbat zusammen mit Lactobionsäure und/oder Lactobionat jeweils in einem Anteil von 0,1 bis 3 g, besonders bevorzugt von 0,1 bis 1,5 g (bezogen auf Trockensubstanzgewicht), jeweils bezogen auf 1 kg des zu pökelnden Lebensmittels, enthalten.

Gegenstand der Erfindung ist auch ein Verfahren zur Herstellung gepökelter Lebensmittel, das insbesondere unter Verwendung des vorstehend charakterisierten erfindungsgemäßen Kits oder der entsprechenden Pökelsalzzusammensetzung durchgeführt wird. Dazu wird in einem bevorzugt ersten Schritt das zu pökelnde Lebensmittel mit der Nitritpökelsalzkomponente in Verbindung gebracht. Dem Lebensmittel wird Nitrit vorzugsweise in einem Anteil von maximal 150 mg, bevorzugt maximal 100 mg, besonders bevorzugt maximal 50 mg, weiter bevorzugt stets weniger als 50 mg, pro 1 kg des zu pökelnden Lebensmittels beigefügt. In dem bevorzugt anschließenden oder alternativ bevorzugt gleichzeitig durchgeführten, bevorzugt zweiten, Schritt, wird das Lebensmittel mit der erfindungsgemäßen Zuckerstoffkomponente in Verbindung gebracht. Dadurch wird ein gepökeltes Lebensmittelprodukt erhalten.

Bevorzugt wird die erfindungsgemäße Zuckerstoffkomponente dem Lebensmittel dabei in einem Anteil von 0,3 bis 15 g, bevorzugt von 0,5 bis 9 g, besonders bevorzugt von 1 bis 5 g, bezogen auf das Trockensubstanzgewicht der Zuckerstoffkomponente und jeweils bezogen auf 1 kg des zu pökelnden Lebensmittels, beigefügt.

In einer besonderen Ausgestaltung des Verfahrens wird das Lebensmittel, bevorzugt anschließend oder alternativ bevorzugt im Wesentlichen gleichzeitig, mit mindestens einer, bevorzugt zusätzlichen, säurebildenden Pökelhilfsstoffkomponente in Verbindung gebracht, und zwar, um den pH-Wert im Lebensmittel zu senken und den Pökelvorgang günstig zu beeinflussen.

In einer weiteren oder dazu alternativen Ausgestaltung des Verfahrens wird das Lebensmittel in einem, bevorzugt anschließend oder alternativ bevorzugt im Wesentlichen gleichzeitig durchgeführten, weiteren Schritt mit einer, bevorzugt zusätzlichen, antioxidativ wirkenden Pökelhilfsstoffkomponente in Verbindung gebracht. Die antioxidativ wirkende Pökelhilfsstoffkomponente wirkt reduzierend und unterstützt den Pökelvorgang.

In einer bevorzugten Variante wird dem Lebensmittel bei der Herstellung keine weitere Zuckerstoffkomponente, besonders keine Glucose, keine Fructose und keine Saccharose, beigefügt. In einer weiteren Variante wird dem Lebensmittel kein weiterer säurebildender und/oder antioxidativ wirkender Pökelhilfsstoff zugefügt. Bevorzugt ist die erfindungsgemäße Zuckerstoffkomponente der einzige dem Lebensmittel bei dem Pökeln oder zu dem Zweck des Pökelns beigefügte Pökelhilfsstoff.

Bevorzugt wird das mit den vorstehend charakterisierten Komponenten in Verbindung gebrachte Lebensmittel in einem bevorzugt unmittelbar anschließend durchgeführten weiteren Schritt durch Lagerung in an sich bekannter Weise zur Reifung gebracht (Reifenlassen), sodass ein gepökeltes Lebensmittel erhalten wird. Die Reifungsdauer beträgt mindestens 24, bevorzugt mindestens 72, alternativ bevorzugt mindestens 120 Stunden.

Gemäß der Erfindung ist das Lebensmittel bevorzugt ausgewählt aus Fleisch und Fleisch-haltigen Zusammensetzungen wie Wurstwaren und ähnliche sowie auch Fisch und Fisch-haltigen Zusammensetzungen sowie Rohfischzubereitungen und ähnliche. Gegenstand der Erfindung ist auch ein unter Durchführung des vorstehend beschriebenen erfindungsgemäßen Verfahrens herstellbares gepökeltes Lebensmittelprodukt, besonders ein gepökeltes Fleisch- oder Fischprodukt, besonders bevorzugt gepökelte Fleisch- oder Wurstware.

Gemäß der Erfindung wird die vorstehend charakterisierte Saccharoseisomerenzusammensetzung als Pökelhilfsstoff zur Verringerung des Restnitritanteils in gepökelten Lebensmittelprodukten verwendet. In einer weiteren Ausführung wird die vorstehend charakterisierte Saccharoseisomerenzusammensetzung als Pökelhilfsstoffkomponente zur Verbesserung der Umrötungswirkung von Nitritpökelsalz verwendet. In einer weiteren Ausgestaltung wird die vorstehend charakterisierte Saccharoseisomerenzusammensetzung als Zuckerstoffkomponente und gleichzeitig als antioxidativ wirkender Pökelhilfsstoff zur Verringerung des Anteils anderer antioxidativ wirkender Pökelhilfsstoffe wie Ascorbinsäure und Ascorbat oder zur Vermeidung solcher weiteren antioxidativ wirkenden Pökelhilfsstoffe im gepökelten Lebensmittelprodukt eingesetzt.

In einer weiteren Ausgestaltung wird die Saccharoseisomerenzusammensetzung als Zuckerstoffkomponente und gleichzeitig als säurebildender Pökelhilfsstoff zur Unterstützung der Pökelwirkung und/oder zur Reduktion oder zur Vermeidung weiterer säurebildender Pökelhilfsstoffe im gepökelten Lebensmittelprodukt eingesetzt.

Die Erfindung wird durch die nachstehenden Ausführungsbeispiele näher charakterisiert und die geltend gemachten Vorteile aufgezeigt, ohne dass diese als den Gegenstand der Erfindung beschränkend zu verstehen wären.

### Beispiele: Untersuchungen zu Restnitritgehalt und Umrötungsgualität erfindungsgemäß gepökelter Rohwurst

Zur Untersuchung der Wirkung der erfindungsgemäßen Zuckerstoffkomponenten und der erfindungsgemäßen Pökelhilfsstoffkomponenten werden Rohwurstproben in an sich bekannter Weise hergestellt. Insbesondere werden Rindfleisch und Schweinefleisch sowie Schweinespeck in veränderlichen Anteilen verwendet.

In einem ersten Schritt werden mageres Fleisch und fettes Material (Speck) in Portionen von etwa einem Kilogramm bei Temperaturen kleiner 4 °C, bevorzugt in leicht angefrorenem Zustand, mit Hilfe eines Fleischwolfs unter Verwendung von 2 mm-Scheiben in an sich bekannter Weise fein zerkleinert, um Fleischbrät zu erhalten.

Jeweils 200 g des auf circa 2 °C gekühlten Bräts werden in einem Mixer (Grindomix™ GM-200 (Firma Retsch)) überführt und mit der Pökelsalzkomponente und den Pökelhilfsstoffen: Zuckerstoffkomponente, weitere, gegebenenfalls säurebildende und/oder weitere gegebenenfalls antioxidativ wirkende Pökelhilfsstoffkomponente, versetzt. Die Masse wird zunächst etwa 1 Minute bei 6.000 U min⁻¹ und dann etwa 2 Minuten bei 3.500 U min⁻¹ durchmischt, sodass ein homogener Kutter entsteht. Anschließend wird das Gemisch noch etwa 3 Minuten geknetet und anschließend in ein Probengefäß, eine Hülle aus Pergament, verpackt und bei Raumtemperatur (18 bis 22 °C) unter Normalbedingungen etwa 1 Tag (17 bis 24 Stunden) bis insgesamt 5 Tage (120 Stunden) gelagert (Reifung).

In bestimmten Teilabständen werden Proben genommen, um den Restnitritgehalt und den Grad der Umrötung zu beurteilen.

Zur Bestimmung des Restnitritgehalts wird gemäß BVL L07.00-12 (Technische Regeln zum Nachweis von Lebensmittelzusatzstoffen; amtliche Sammlung nach § 35 des Deutschen LMBG; Bestimmung des Nitrit- und Nitratgehaltes von Fleischerzeugnissen) in an sich bekannter Weise vorgegangen. Im Einzelnen werden genau 10,0 g einer Probe in einen Erlenmeierkolben eingewogen und mit 100 ml heißem Wasser für 30 Minuten in einem kochenden Wasserbad (100 °C) unter Bewegung erhitzt.

Nach Abkühlen wird durch Zugabe von jeweils 2 ml Garrez-Lösung I und II (Garrez-Lösung I: Kaliumhexacyanoferrat (II); Garrez-Lösung II: Zinksulfat • 7H₂O in Wasser, 300 g/Liter) die Eiweißfällung eingeleitet. Dazu wird die Probe für 30 Minuten geschüttelt und anschließend bei Raumtemperatur ruhen gelassen, bis sich ein klarer Überstand bildet. Zur Abtrennung der Eiweißfraktion wird die Lösung in einen 200 ml-Messkolben überführt und mit 200 ml Wasser aufgefüllt, erneut gemischt und anschließend filtriert.

Zum Nitratnachweis wird das erhaltene Filtrat mit 3 ml eines Reagenz aus Sulfanilamid und N-(1-Naphtyl)-Ethylendiammoniumdichlorid-Lösung (1:1) versetzt, wobei sich ein Farbkomplex bildet. Nach etwa 30 Minuten Ruhe bei Raumtemperatur wird die Extinktion der Lösung bei 540 nm ermittelt und gegen eine Standardlösung verglichen. Die Konzentration an Nitrit (dargestellt als NaNO₂) wird aus den Messwerten im Verhältnis zu den Vergleichswerten der Standardlösung ermittelt.

Zur Bestimmung des Umrötungsgrads wird eine Farbmessung (Rotwert-a*) nach CIE in an sich bekannter Weise durchgeführt. Es wird die Wurstfarbe mit einem Spektrophotometer vom Typ CM-2002 (Minolta Camera Co. Ldt., Japan) bei Lichtart: DE65/10° gemessen.

Zur Darstellung der Ergebnisse wird der Restnitritgehalt in mg/kgProbe angegeben. Die Umrötung wird als a*-Rotwert (dimensionsloser Wert) angegeben. In den nachfolgenden Tabellen sind die einzelnen Probenzusammensetzungen die Anteile an Nitrit, Zuckerstoffkomponente, Pökelhilfsstoffkomponente angeführt.

In den nachfolgenden Beispielen wird als "Isomaltulose-Sirup" eine Zusammensetzung eingesetzt, die folgende Komponenten enthält:

| | |
|---|---|
| Isomaltulose: | 82,5 % |
| Trehalulose: | 9,5 % |
| Fructose: | 2,5 % |
| Glucose: | 2,0 % |
| Saccharose: | 1,0 % |
| Isomaltose: | 1,5 % |
| Oligomere: | 1,0 % |

jeweils Gew.-%, berechnet auf Trockensubstanzgewicht

Unter der Bezeichnung "Trehalulose-Sirup" wird folgende Zusammensetzung eingesetzt:

| | |
|---|---|
| Trehalulose: | 80,5 % |
| Isomaltulose: | 17,1 % |
| Fructose: | 0,4 % |
| Glucose: | 0,4 % |
| Saccharose: | 0,6 % |
| Isomaltose: | 0,2 % |
| Isomelizitose und Oligomere: | 1,0 % |

jeweils Gew.-%, berechnet auf Trockensubstanzgewicht

Unter der Bezeichnung "Sirup-Großtank" wird folgende Zusammensetzung eingesetzt:

| | |
|---|---|
| Isomaltulose: | 32 ± 5 % |
| Trehalulose: | 28 ± 5% |
| Fructose, Glucose und Saccharose: | 32 ± 5 % |
| Isomaltose und Oligomere: | max. 10 % |

jeweils Gew.-%, berechnet auf Trockensubstanzgewicht

Unter der Bezeichnung "Sirup-B60" wird eine "Sirup-Großtank"-Zusammensetzung verstanden, die aufgrund der Gegenwart von ungepufferten Säuren eine pH-Wert von pH 4,5 bis 5,0 aufweist.

### Beispiele 1 bis 6:

Es wurde ein Rohfleischgemisch, enthaltend 20 % Rindfleisch, 50 % mageres Schweinefleisch und 30 % Fett mit den in Tabelle 1A angegebenen Pökelkomponenten in an sich bekannter Weise zu einem Rohwurstbrät verarbeitet. (Beispiel 1 ist das reine Rohfleischgemisch, ohne Zusatz von Nitritpökelsalz und Pökelhilfsstoffen. Weder ein Restnitritgehalt noch ein Rotwert der Umrötung konnten in Beispiel 1 bestimmt werden. Die Ergebnisse zur Beispiel sind in den nachfolgenden Tabellen nicht dargestellt.) Beispiel 2 (Bsp. 2) ist das Vergleichsexperiment mit einer an sich bekannten Pökelzusammensetzung.

Die Tabellen 1 B und 1C zeigen jeweils den Restnitritgehalt und den Grad der Umrötung, jeweils bestimmt nach einer Reifezeit von 24 beziehungsweise 74 Stunden.

**Tabelle 1A**

| **Bestandteil** | **Bsp.2** | **Bsp. 3 (nicht erfindungsgemäß** | **Bsp. 4 (nicht erfindungsgemäß)** | **Bsp. 5** | **Bsp. 6** |
|---|---|---|---|---|---|
| (ohne Gewürze) | (Menge pro 1 kg Rohfleischgemisch) | | | | |
| Glucose | 5,0 g | | | | |
| Isomaltulose | | 5,0 g | | | |
| Trehalulose | | | 5,0 g | | |
| Isomaltulose-Sirup | | | | 5,0 g(TS) | |
| Trehalulose-Sirup | | | | | 5,0 g (TS) |
| Ascorbinsäure | 0,3 g | 0,3 g | 0,3 g | 0,3 g | 0,3 g |
| Natriumchlorid | 25,0 g | 25,0 g | 25,0 g | 25,0 g | 25,0 g |
| Natriumnitrit | 100 mg | 100 mg | 100 mg | 100 mg | 100 mg |

**Tabelle 1B**

| | **Bsp. 2** | **Bsp. 3** | **Bsp. 4** | **Bsp. 5** | **Bsp. 6** |
|---|---|---|---|---|---|
| **Reifezeit** | **Glucose** | **Isomaltulose** | **Trehalulose** | **Isomaltulose-Sirup** | **Trehalulose-Sirup** |
| **h** | **[NO₂] mg/kg** | | | | |
| 0 | 100 | 100 | 100 | 100 | 100 |
| 24 | 90 | 80 | 75 | 71 | 70 |
| 74 | 70 | 50 | 40 | 30 | 30 |

**Tabelle 1C**

| | **Bsp. 2** | **Bsp. 3** | **Bsp. 4** | **Bsp.5** | **Bsp. 6** |
|---|---|---|---|---|---|
| **Reifezeit** | **Glucose** | **Trehalulose** | **Isomaltulose** | **Isomaltulose -Sirup** | **Trehalulose -Sirup** |
| **h** | **a*(Rotwert)** | | | | |
| 24 | 3,4 | 4,48 | 3,7 | 5,6 | 5,5 |
| 74 | 6,1 | 8,9 | 8,7 | 10,1 | 10,1 |

### Beispiele 7 bis 13:

Es wurde ein Rohfleischgemisch hergestellt aus 40 % Rindfleisch, 40 % magerem Schweinefleisch und 20 % Speck. Daraus wurde unter Verwendung der in der Tabelle 2A jeweils genannten Pökelstoffe ein Rohwurstbrät hergestellt.

Tabelle 2B zeigt den Restnitritgehalt und den Grad der Umrötung jeweils nach einer Reifezeit von 24 und 120 Stunden.

**Tabelle 2A**

| **Bestandteil** | **Bsp. 7 (nicht erfindungsgemäß)** | **Bsp. 8 (nicht erfindungs-gemäß)** | **Bsp. 9 (nicht erfindungsgemäß)** | **Bsp. 10** |
|---|---|---|---|---|
| (ohne Gewürze) | (Menge pro 1 kg Rohfleischgemisch) | | | |
| Glucose | 5,0 g | | | |
| Isomaltulose | | 5,0 g | | |
| Trehalulose | | | 5,0 g | |
| Isomaltulose-Sirup | | | | 5,0 g (TS) |
| Trehalulose-Sirup | | | | |
| Sirup(Großtank) | | | | |
| Sirup-B 60 | | | | |
| Ascorbinsäure | 0,3 g | 0,3 g | 0,3 g | 0,3 g |
| Natriumchlorid | 25,0 g | 25,0 g | 25,0 g | 25,0 g |
| Natriumnitrit | 150 mg | 150 mq | 150 mg | 150 mg |

| **Bestandteil** | **Bsp. 11** | **Bsp. 12** | **Bsp. 13** | |
|---|---|---|---|---|
| (ohne Gewürze) | (Menge pro 1 kg Rohfleischgemisch) | | | |
| Glucose | | | | |
| Isomaltulose | | | | |
| Trehalulose | | | | |
| Isomaltulose-Sirup | | | | |
| Trehalulose-Sirup | 5,0 g (TS) | | | |
| Sirup(Großtank) | | 5,0 g (TS) | | |
| Sirup-B 60 | | | 5,0 g (TS) | |
| Ascorbinsäure | 0,3 g | 0,3 g | 0,3 g | |
| Natriumchlorid | 25,0 g | 25,0 g | 25,0 g | |
| Natriumnitrit | 150 mg | 150 mg | 150 mg | |

Tabelle 2B

| | | **Rotwert-a*** | | **[NO₂] mg/kg** | |
|---|---|---|---|---|---|
| | | **24h** | **120h** | **24 h** | **120 h** |
| Bsp. 7 | Glucose | 11,1 | 12,04 | 120 | 70 |
| Bsp. 8 | Isomaltulose | 11,71 | 13,97 | 100 | 20 |
| Bsp. 9 | Trehalulose | 12,95 | 14,48 | 80 | 20 |
| Bsp. 10 | Isomaltulose-Sirup | 13,3 | 14,22 | 98 | 20 |
| Bsp. 11 | Trehalulose-Sirup | 13,1 | 13,82 | 100 | 20 |
| Bsp. 12 | Sirup-Großtank | 13,01 | 15,42 | 100 | 10 |
| Bsp. 13 | Sirup-B 60 | 12,5 | 13,87 | 120 | 20 |

### Beispiele 14 bis 21:

Es wurde ein Rohfleischgemisch aus 45 % Rindfleisch, 35 % magerem Schweinefleisch und 20 % Speck hergestellt und jeweils mittels der in Tabelle 3A angegebenen Pökelstoffe zu einem Rohwurstbrät verarbeitet.

Die Tabelle 3B zeigt den Umrötungsgrad und den Restnitritgehalt jeweils nach 17 und 72 Stunden Reifung.

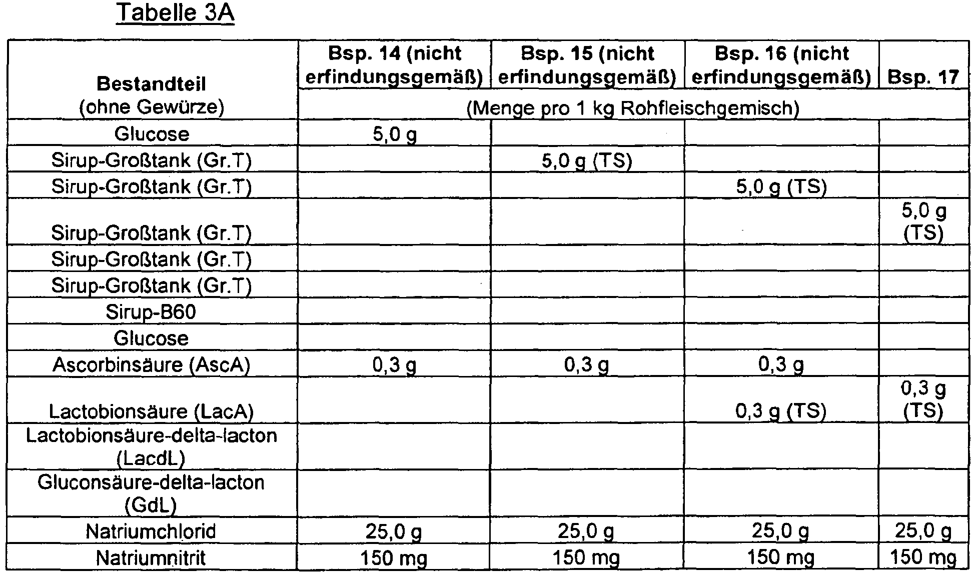

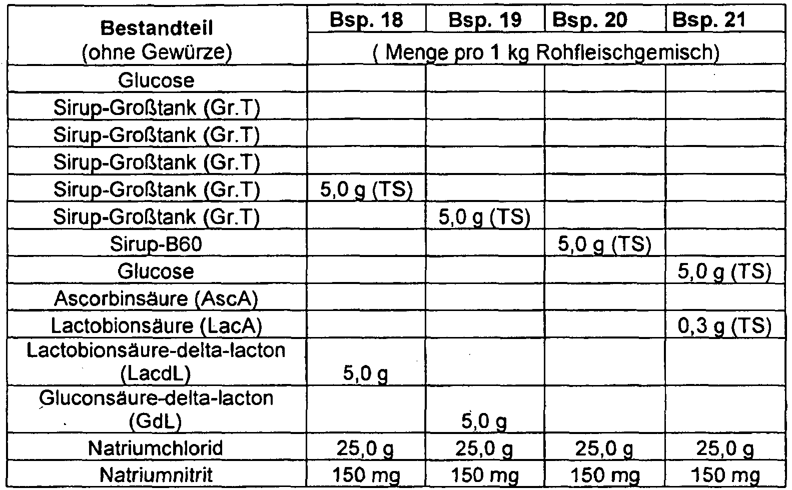

**Tabelle 3B**

| | | **Rotwert-a*** | | **NO₂⁻ mg/kg** | |
|---|---|---|---|---|---|
| | **Pökelsystem** | **17 h** | **72 h** | **17 h** | **72 h** |
| Bsp.14 | Glucose+AscA | 11,75 | 12,96 | 80 | 120 |
| Bsp.15 | Gr.T.+AscA | 13,67 | 14,06 | 35 | 110 |
| Bsp.16 | Gr.T.+AscA+LacA | 14,66 | 14,5 | 35 | 100 |
| Bsp.17 | Gr.T.+LacA | 14,83 | 15,57 | 30 | 100 |
| Bsp.18 | Gr.T.+LacdL | 14,58 | 15,1 | 30 | 100 |
| Bsp.19 | Gr.T.+GdL | 15,59 | 15,89 | 20 | 90 |
| Bsp.20 | Sirup-B 60 | 15,26 | 16,68 | 15 | 90 |
| Bsp.21 | Glucose+LacA | 13,83 | 15,11 | 35 | 110 |

### Beispiele 22 bis 27:

Es wurde ein Rohfleischgemisch aus 50 % Rindfleisch, 30 % magerem Schweinefleisch und 20 % Speck hergestellt und jeweils mit den in Tabelle 4A angegebenen Pökelstoffen zu einem Rohwurstbrät verarbeitet.

Die Tabelle 4B zeigt den Umrötungsgrad und den Restnitritgehalt jeweils nach 17 und 72 Stunden Reifezeit.

**Tabelle 4A**

| **Bestandteil** (ohne Gewürze) | **Bsp. 22 (nicht erfindungsgemäß)** | **Bsp. 23 (nicht erfindungsgemäß)** | **Bsp. 24** | **Bsp. 25** | **Bsp. 26** | **Bsp. 27** |
|---|---|---|---|---|---|---|
| Glucose | 5,0 g | | | | | |
| Isomaltulose | | 2,5 g | | | | |
| Isomaltulose -Sirup | | | 2,5 g (TS) | | | |
| Trehalulose -Sirup | | | | 2,5 g (TS) | | |
| Sirup-Großtank | | | | | 2,5 g (TS) | |
| Sirup-B 60 | | | | | | 2,5 g (TS) |
| Ascorbinsäure | 0,3 g | 0,3 g | 0,3 g | 0,3 g | 0,3 g | 0,3 g |
| Natriumchlorid | 25,0 g | 25,0 g | 25,0 g | 25,0 g | 25,0 g | 25,0 g |
| Natriumnitrit | 150 mg | 150 mg | 150 mg | 150 mg | 150 mg | 150 mg |

**Tabelle 4B**

| | | **a*-Rotwert** | | **NO₂⁻ mg/kg** | |
|---|---|---|---|---|---|
| | | **17 h** | **72 h** | **17 h** | **72 h** |
| Bsp. 22 | Glucose | 10,67 | 13,64 | 110 | 70 |
| Bsp. 23 | Isomaltulose | 11,12 | 13,65 | 100 | 65 |
| Bsp. 24 | Isomaltulose-Sirup | 13,88 | 15,02 | 80 | 40 |
| Bsp. 25 | Trehalulose-Sirup | 13,69 | 14,92 | 80 | 40 |
| Bsp. 26 | Sirup-Großtank | 11,79 | 15,05 | 90 | 30 |
| Bsp. 27 | Sirup-B 60 | 11,41 | 13,92 | 100 | 50 |

### Beispiele 28 bis 32 (nicht erfindungsgemäß):

Es wurde ein Rohfleischgemisch aus 50 % Rindfleisch, 30 % magerem Schweinefleisch und 20 % Speck hergestellt und jeweils mit den in Tabelle 5A angegebenen Pökelstoffen zu einem Rohwurstbrät verarbeitet.

Die Tabelle 5B zeigt den Umrötungsgrad und den Restnitritgehalt jeweils nach 17 und 72 Stunden Reifezeit.

**Tabelle 5A**

| **Bestandteil** (ohne Gewürze) | **Bsp. 28** | **Bsp. 29** | **Bsp. 30** | **Bsp. 31** |
|---|---|---|---|---|
| | (Menge pro 1 kg Rohfleischgemisch) | | | |
| Isomaltulose | 2,5 g | | | |
| Isomaltulose | | 2,5 g | | |
| Isomaltulose | | | 2,5 g | |
| Isomaltulose | | | | 2,5 g |
| GdL | 3,0 g | | | |
| Lactobionsäure | | 0,3 g | | |
| Lactobionsäurelacton | | | | |
| Eisengluconat | | | | |
| Natriumchlorid | 25,0 g | 25,0 g | 25,0 g | 25,0 g |
| Natriumnitrit | 150 mg | 150 mg | 150 mg | 150 mg |

**Tabelle 5B**

| | | **a*-Rotwert** | | **NO₂⁻ mg/kg** | |
|---|---|---|---|---|---|
| | | **17 h** | **72 h** | **17 h** | **72 h** |
| Bsp. 28 | GdL | 13,08 | 13,86 | 85 | 45 |
| Bsp. 29 | Lactobionsäure | 13,97 | 15,12 | 60 | 20 |
| Bsp. 30 | Lactobionsäurelacton | 12,99 | 13,8 | 90 | 50 |
| Bsp. 31 | GdL + Eisengluconat | 13,56 | 13,93 | 70 | 40 |

### Vergleich:

| | | | | | |
|---|---|---|---|---|---|
| Bsp. 22 | Glucose + AscA | 10,67 | | 13,64 110 | 70 |

### Beispiele 32 bis 42:

Es wurde ein Rohfleischgemisch aus 40 % Rindfleisch, 40 % magerem Schweinefleisch und 20 % Speck hergestellt und jeweils mit den in Tabelle 6A angegebenen Pökelstoffen zu einem Rohwurstbrät verarbeitet.

Die Tabelle 6B zeigt den Umrötungsgrad und den Restnitritgehalt jeweils nach 24 und 72 Stunden Reifezeit.

**Tabelle 6A**

| **Bestandteil** | **Bsp. 32 (nicht erfindungsgemäß)** | **Bsp. 33 (nicht erfindungsgemäß)** | **Bsp. 34 (nicht erfindungsgemäß)** | **Bsp.35 (nicht erfindungsgemäß)** | **Bsp. 36** | |
|---|---|---|---|---|---|---|
| (ohne Gewürze) | (Menge pro 1 kg Rohfleischgemisch) | | | | | |
| Glucose | 5,0 g | | | | | |
| Isomaltulose | | 5,0 g | 2,5 g | 2,5 g | | |
| Sirup-Großtank | | | | | 5,0 g (TS) | |
| Sirup-B 60 | | | | | | |
| Ascorbinsäure | 0,3 g | 0,3 g | 0,3 g | 0,15 g | 0,3 g | |
| Natriumchlorid | 25,0 g | 25,0 g | 25,0 g | 25,0 g | 25,0 g | |
| Natriumnitrit | 150 mg | 150 mg | 150 mg | 150 mg | 150 mg | |

| **Bestandteil** | **Bsp. 37** | **Bsp. 38** | **Bsp. 39** | **Bsp. 40** | **Bsp. 41** | **Bsp. 42** |
|---|---|---|---|---|---|---|
| (ohne Gewürze) | (Menge pro 1 kg Rohfleischgemisch) | | | | | |
| Glucose | | | | | | |
| Isomaltulose | | | | | | |
| Sirup-Großtank | 2,5 g (TS) | 2,5 g (TS) | | | | |
| Sirup-B 60 | | | 5,0 g (TS) | 2,5 g (TS) | 2,5 g (TS) | 2,5 g (TS) |
| Ascorbinsäure | 0,3 g | 0,15 g | 0,3 g | 0,3 g | 0,15 g | |
| Natriumchlorid | 25,0 g | 25,0 g | 25,0 g | 25,0 g | 25,0 g | 25,0 g |
| Natriumnitrit | 150 mg | 150 mg | 150 mg | 150 mg | 150 mg | 150 mg |

**Tabelle 6B**

| | **a*-Rotwert** | | **NO₂⁻ mg/kg** | |
|---|---|---|---|---|
| | **24 h** | **72 h** | **24 h** | **72 h** |
| Bsp. 32 | 12,93 | 15,38 | 110 | 75 |
| Bsp. 33 | 17,26 | 18,11 | 70 | 40 |
| Bsp. 34 | 16,75 | 17,68 | 75 | 50 |
| Bsp. 35 | 15,33 | 16,58 | 90 | 55 |
| Bsp. 36 | 17,01 | 19,18 | 72 | 20 |
| Bsp. 37 | 16,08 | 18,07 | 80 | 40 |
| Bsp. 38 | 16,4 | 17,59 | 78 | 50 |
| Bsp. 39 | 17,66 | 18,45 | 65 | 25 |
| Bsp. 40 | 16,95 | 17,59 | 75 | .40 |
| Bsp. 41 | 15,89 | 16,2 | 85 | 55 |
| Bsp. 42 | 16,18 | 17,09 | 80 | 50 |

Die erfindungsgemäßen Saccharoseisomerenzusammensetzungen sowie die Saccharoseisomere als Reinsubstanzen (Isomaltulose, Kristallin, oder Trehalulose, gefriergetrocknet) ermöglichen im Vergleich zu der Referenzsubstanz Glucose eine signifikant bessere Umrötung und einen geringeren Restnitritgehalt in Abhängigkeit der Reifezeit. Es zeigt sich weiter, dass auch bei einer Reduzierung der Einsatzmenge an Zuckerstoffkomponenten, an Nitritpökelsalzkomponenten und an weiteren Pökelhilfsstoffkomponenten ein besseres Pökelergebnis erzielt werden kann als bei einer Standardrezeptur mit Glucose. Der Einsatz von Ascorbinsäure/Ascorbat kann bei Gegenwart der erfindungsgemäßen Zuckerstoffkomponenten reduziert oder gegebenenfalls komplett eingestellt werden. Der Restnitritgehalt nach beispielsweise 72 beziehungsweise 120 Stunden Reifezeit liegt deutlich unter dem gesetzlich für Biofleischware geforderten Grenzwert von 50 ml/kg Nitrit. Weiter zeigt sich, dass die erfindungsgemäßen Zuckerstoffkomponenten vor allem in Kombination mit den erfindungsgemäßen neuartigen Pökelhilfsstoffen Lactobionsäure, Lactobionsäure-delta-lacton besonders effektiv sind. Letztere bilden auch in Verbindung mit bekannten Zuckerstoffkomponenten wie Glucose ein verbessertes Pökelsystem.

## Patentansprüche

1. Kit zum Pökeln von Lebensmittel, enthaltend:
- Nitritpökelsalzkomponente (NPS) und
- Zuckerstoffkomponente, die eine Saccharoseisomerenzusammensetzung ist, die zu überwiegendem Anteil aus den Saccharoseisomeren Isomaltulose und Trehalulose besteht.

2. Kit nach Anspruch 1, wobei in der Nitritpökelsalzkomponente Nitritsalz in einem Anteil von 0,1 bis 0,6 Gew.-% enthalten ist.

3. Kit nach einem der vorstehenden Ansprüche, wobei Nitritsalz in einem Anteil bis maximal 150 mg pro 1 kg des zu pökelnden Lebensmittels enthalten ist.

4. Kit nach einem der vorstehenden Ansprüche, wobei die Zuckerstoffkomponente in einem Anteil von 0,5 bis 9 g (bezogen auf das Trockensubstanzgewicht) pro 1 kg des zu pökelnden Lebensmittels enthalten ist.

5. Kit nach einem der vorstehenden Ansprüche, enthaltend die weitere Komponente:
- säurebildende Pökelhilfsstoffkomponente, die ausgewählt ist aus:
Ascorbinsäure und deren Salze, Glucono-delta-lacton, Lactobionsäure und deren Salze, Lactobionsäure-delta-lacton und Gemischen davon.

6. Kit nach Anspruch 5, wobei die säurebildende Pökelhilfsstoffkomponente in einem Anteil von 0,1 bis 9 g (bezogen auf Trockensubstanzgewicht) pro 1 kg des zu pökelnden Lebensmittels enthalten ist.

7. Kit nach Anspruch 5, wobei die Zuckerstoffkomponente des Kits auch die säurebildende Pökelhilfsstoffkomponente bildet und die Zuckerstoffkomponente/säurebildende Komponente eine Saccharoseisomerenzusammensetzung, enthaltend ungepufferte Säuren, mit einem pH-Wert von 4 bis 5 ist.

8. Kit nach einem der vorstehenden Ansprüche, enthaltend die weitere Komponente:
- antioxidativ wirkende Pökelhilfsstoffkomponente.

9. Kit nach Anspruch 8, wobei die antioxidativ wirkende Pökelhilfsstoffkomponente ausgewählt ist aus der Gruppe der Antioxidantien bestehend aus: sekundären Pflanzenstoffen, Gewürzen und Gewürzextrakten und Gemischen davon.

10. Kit nach Anspruch 8 oder 9, wobei die Zuckerstoffkomponente des Kits auch die antioxidativ wirkende Pökelhilfsstoffkomponente ist.

11. Verfahren zur Herstellung gepökelter Lebensmittel, enthaltend die Schritte:
- Inverbindungbringen des zu pökelnden Lebensmittels mit einer Nitritpökelsalzkomponente (NPS);
- Inverbindungbringen des Lebensmittels mit einer in einem der Ansprüche 1 bis 10 charakterisierten Zuckerstoffkomponente.

12. Gepökeltes Lebensmittelprodukt, herstellbar nach Anspruch 11.

13. Verwendung der in einem der vorstehenden Ansprüche 1 bis 10 charakterisierten Saccharoseisomerenzusammensetzung als Pökelhilfsstoff zur Verringerung des Restnitritanteils im gepökelten Lebensmittelprodukt.

14. Verwendung der in einem der vorstehenden Ansprüche 1 bis 10 charakterisierten Saccharoseisomerenzusammensetzung als Pökelhilfsstoff zur Verbesserung der Umrötungswirkung von Nitritpökelsalz.

15. Verwendung der in einem der vorstehenden Ansprüche 1 bis 10 charakterisierten Saccharoseisomerenzusammensetzung als Zuckerkomponente und antioxidativ wirkender Pökelhilfsstoff zur Verringerung oder Vermeidung des Anteils anderen antioxidativ wirkenden Pökelhilfstoffe wie Ascorbinsäure und Ascorbat im gepökelten Lebensmittelprodukt.

## Claims

1. A kit for curing foods, containing:
- nitrite curing salt component (NPS) and
- sugar substance component, which is a sucrose isomer composition consisting predominantly of the sucrose isomers isomaltulose and trehalulose.

2. The kit according to claim 1, wherein nitrite salt is present in the nitrite curing salt component in an amount of 0.1 to 0.6% by weight.

3. The kit according to any one of the preceding claims, wherein nitrite salt is present in an amount of up to max. 150 mg per 1 kg of the foodstuff to be cured.

4. The kit according to any one of the preceding claims, wherein the sugar substance component is present in an amount of 0.5 to 9 g (based on the dry solids weight) per 1 kg of the foodstuff to be cured.

5. The kit according to any one of the preceding claims containing the additional component:
- acid-forming curing additive component selected from
ascorbic acid and salts thereof, glucono-delta-lactone, lactobionic acid and salts thereof, lactobionic acid-delta-lactone and mixtures thereof.

6. The kit according to claim 5, wherein the acid-forming curing additive component is present in an amount of 0.1 to 9 g (based on dry solids weight) per 1 kg of the foodstuff to be cured.

7. The kit according to claim 5, wherein the sugar substance component of the kit also forms the acid-forming curing additive component and the sugar substance component/acid-forming component is a sucrose isomer composition containing unbuffered acids with a pH of 4 to 5.

8. The kit according to any one of the preceding claims containing the additional component:
- antioxidant curing additive component.

9. The kit according to claim 8, wherein the curing additive component having an antioxidant effect is selected from the group of antioxidants consisting of secondary plant substances, spices and spice extracts and mixtures thereof.

10. The kit according to claim 8 or 9, wherein the sugar substance component of the kit is also the curing additive component that has the antioxidant effect.

11. A method for preparing cured foods comprising the steps:
- bringing the foodstuff to be cured into contact with a nitrite curing salt component (NPS);
- bringing the food into contact with a sugar substance component which is a sugar substance component **characterized in** claims 1 through 10.

12. A cured food product that can be produced by claim 11.

13. A use of the sucrose isomer composition, **characterized in** any one of the preceding claims 1 through 10 as a curing additive to reduce the residual nitrite content in the cured food product.

14. A use of the sucrose isomer composition, **characterized in** any one of the preceding claims 1 through 10 as a curing additive to improve the reddening effect of nitrite curing salt.

15. A use of the sucrose isomer composition **characterized in** any one of the preceding claims 1 through 10 as a sugar component and as an antioxidant curing additive to reduce or eliminate the amount of other antioxidant curing additives such as ascorbic acid and ascorbate in the cured food product.

## Revendications

1. Kit de saumurage d'aliment contenant :
- un composant de sel de saumurage nitrité (NPS) et
- un composant édulcorant qui est une composition d'isomères de saccharose qui se compose en proportion prépondérante des isomères de saccharose que sont l'isomaltulose et le tréhalulose.

2. Kit selon la revendication 1, dans lequel du sel nitrité est contenu dans le composant de sel de saumurage nitrité dans une proportion de 0,1 à 0,6 % en poids.

3. Kit selon l'une quelconque des revendications précédentes, dans lequel du sel nitrité est contenu dans une proportion allant jusqu'à 150 mg par 1 kg maximum de l'aliment à saumurer.

4. Kit selon l'une quelconque des revendications précédentes, dans lequel le composant édulcorant est contenu dans une proportion de 0,5 à 9 g (par rapport au poids de substance sèche) par 1 kg de l'aliment à saumurer.

5. Kit selon l'une quelconque des revendications précédentes, contenant le composant supplémentaire :
- composant adjuvant de saumurage formateur d'acide qui est sélectionné parmi :
acide ascorbique et ses sels, glucono-delta-lactone, acide lactobionique et ses sels, acide lactobionique-delta-lactone et des mélanges de ceux-ci.

6. Kit selon la revendication 5, dans lequel le composant adjuvant de saumurage formateur d'acide est contenu dans une proportion de 0,1 à 9 g (par rapport au poids de substance sèche) par 1 kg de l'aliment à saumurer.

7. Kit selon la revendication 5, dans lequel le composant édulcorant du kit forme également le composant adjuvant de saumurage formateur d'acide et le composant édulcorant/composant formateur d'acide est une composition d'isomères de saccharose contenant des acides non tamponnés avec un pH de 4 à 5.

8. Kit selon l'une quelconque des revendications précédentes, contenant le composant supplémentaire :
- composant adjuvant de saumurage à action anti-oxydante.

9. Kit selon la revendication 8, dans lequel le composant adjuvant de saumurage à action anti-oxydante est sélectionné parmi le groupe des antioxydants constitué de : substances végétales secondaires, épices et extraits d'épices et des mélanges de ceux-ci.

10. Kit selon la revendication 8 ou 9, dans lequel le composant édulcorant du kit est également le composant adjuvant de saumurage à action anti-oxydante.

11. Procédé de fabrication d'aliments saumurés, contenant les étapes :
- mise en relation de l'aliment à saumurer avec un composant de sel de saumurage nitrité (NPS) ;
- mise en relation de l'aliment avec un composant édulcorant caractérisé dans l'une quelconque des revendications 1 à 10.

12. Produit alimentaire saumuré pouvant être fabriqué selon la revendication 11.

13. Utilisation de la composition d'isomères de saccharose caractérisée dans l'une quelconque des revendications précédentes 1 à 10 en tant qu'adjuvant de saumurage en vue de la réduction de la proportion de nitrite résiduelle dans le produit alimentaire saumuré.

14. Utilisation de la composition d'isomères de saccharose caractérisée dans l'une quelconque des revendications précédentes 1 à 10 en tant qu'adjuvant de saumurage en vue de l'amélioration de l'action de rougissement du sel de saumurage nitrité.

15. Utilisation de la composition d'isomères de saccharose caractérisée dans l'une quelconque des revendications précédentes 1 à 10 en tant que composant édulcorant et adjuvant de saumurage à action anti-oxydante en vue de la réduction ou de l'évitement de la proportion d'autres adjuvants de saumurage à action anti-oxydante comme l'acide ascorbique et l'ascorbate dans le produit alimentaire saumuré.
